# EUROPEAN PATENT SPECIFICATION

(11) **EP 2 222 587 B1**
(45) Date of publication and mention of the grant of the patent: **08.08.2012**
(21) Application number: 08861090.2
(22) Date of filing: 15.12.2008
(51) Int. Cl.: B65H 3/08, B25J 15/06, B65C 9/14, B25B 11/00

(54) **RETAINING TOOL**
HALTEWERKZEUG
OUTIL DE RETENUE

(30) Priority: 19.12.2007 SE 0702827
(43) Date of publication of application: 01.09.2010
(73) Proprietor: Autolabel AB, 411 37 Göteborg (SE)
(72) Inventor: DIJKSTRA, Gerard, S-SE 440 30 Marstrand (SE); SÖDERGÅRD, Jonas, S-SE 416 49 Göteborg (SE)
(74) Representative: Bergentall, Annika Maria
(86) International application number: PCT/SE2008/051456
(87) International publication number: WO 2009/078797

(56) References cited:
- EP-A1- 1 308 633
- WO-A1-2006/001762
- DE-B3-102005 046 160
- GB-A- 2 435 843
- JP-A- 9 002 682
- SE-B- 466 561
- US-A- 4 185 814
- US-A- 5 704 673

## Description

The present invention relates to a retaining tool forming an applicator plate for the application of labels on objects.

Applicator plates are utilized as carriers of labels from the moment when they have been dispensed away from the bottom paper of the paper web concerned to the moment when they have been pressed in place on objects concerned. In that connection, the label in question is held in place by means of negative pressure, which is provided by means of fans or a central vacuum ejector. However, when using fans there is the limitation that they are large, and when using a central ejector, the disadvantage follows that high losses arise because of it being at a great distance from the position where vacuum is applied. See, for instance, WO 2005/095215 A1.

A further retaining tool with a single vacuum ejector is disclosed in JP-A-09002682.

In that connection, the main object of the present invention is to provide a simple and well working retaining tool forming an applicator plate.

Said object is attained according to the present invention by means of a retaining tool as defined in claim 1.

Production of different objects can simply and efficiently be carried out by means of so-called free forming, i.e., a method that is based on layers of plastic material being applied for the formation of said objects based on a 3D geometry. Examples of this are shown among others in SE 527337 C2, in which patent specification it is shown and disclosed a method for, by means of free forming, providing grip attachments having integrated vacuum ducts. A fitting to an external vacuum source is, in that connection, shown in the form of a vacuum nipple (5).

Therefore, the tool of the present invention, in which pressure ducts, etc., as well as vacuum ejectors are integrated is preferably produced by casting or free forming of an integral piece of material of metal or plastic material, which allows the production of simple or complicated applicator plates having integrated vacuum ejectors in a simple and effective way. Vacuum does not provide so high an effect since the negative pressure cannot be that great. In that connection, by utilizing pressure conducted in pressure ducts, the losses are decreased. This makes it possible to place the ejectors next to the location where vacuum should be created as well as that it is possible to select as many ejectors as desired at a very low cost. Another advantage is that it is possible to decrease the flow in the ejector and thereby suppress noise as well as also save energy. A solid tool piece allows a tight arrangement with ejectors along the tool and the working surface thereof.

In the following, the invention is described in the form of a number of preferred embodiment examples, reference being made to the accompanying drawings in which,
Fig. 1 shows a view from above of a tool for supporting labels,
Fig. 2 shows the tool from the suction side thereof,
Fig. 3 shows a section view along the line III-III in Fig. 1,
Fig. 4 shows a section view along the line IV-IV in Fig. 1,
Fig. 5 shows a section view along the line V-V in Fig. 1,
Fig. 6 shows an enlargement of a vacuum ejector that is encircled in Fig. 5,
Fig. 7 shows a view from above of the tool as seen in perspective,
Fig. 8 shows a front view of the tool as seen in perspective,
Fig. 9 shows a label adhered by suction on the front side of a tool,
Figs. 10-11 schematically show ducts included in the tool,
Figs. 12-14 show a retaining tool not in accordance with the present invention, wherein

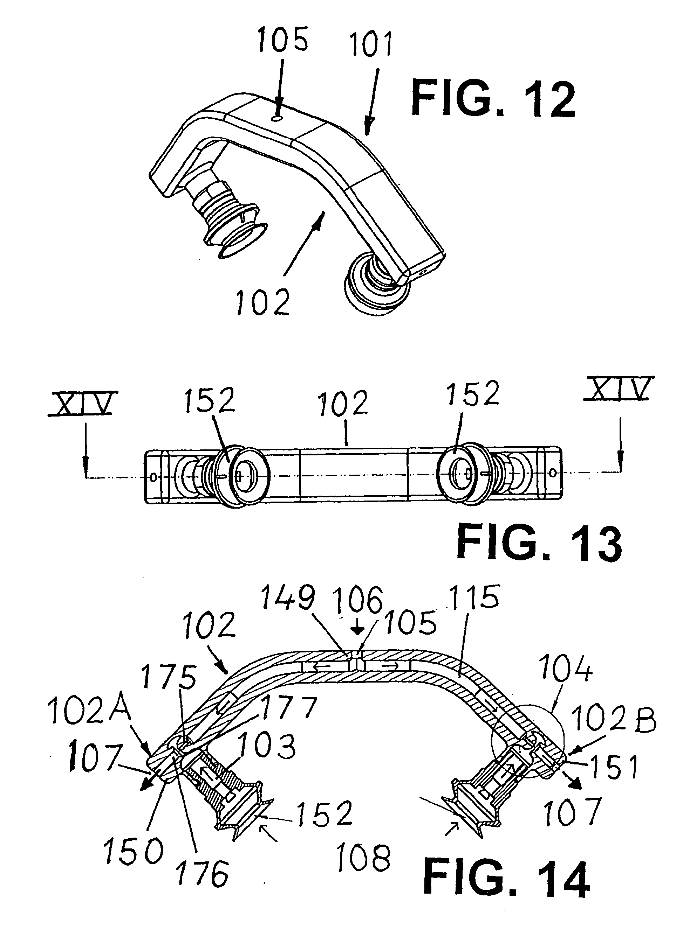

Fig. 12 shows the tool in perspective,
Fig. 13 shows the tool as seen from the front side thereof,
Fig. 14 shows a section view along the line XIV-XIV in Fig. 13,

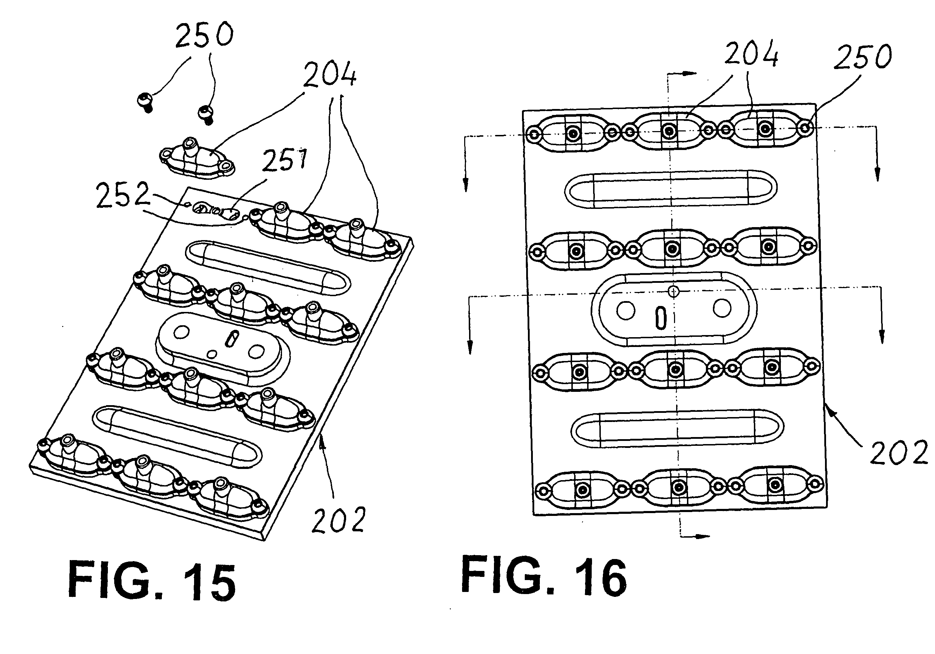

Figs. 15-17 show a variant of a retaining tool in accordance with the present invention, wherein
Fig. 15 shows in perspective and obliquely from above a partly exploded view of a tool,
Fig. 16 shows the tool straight from above, and

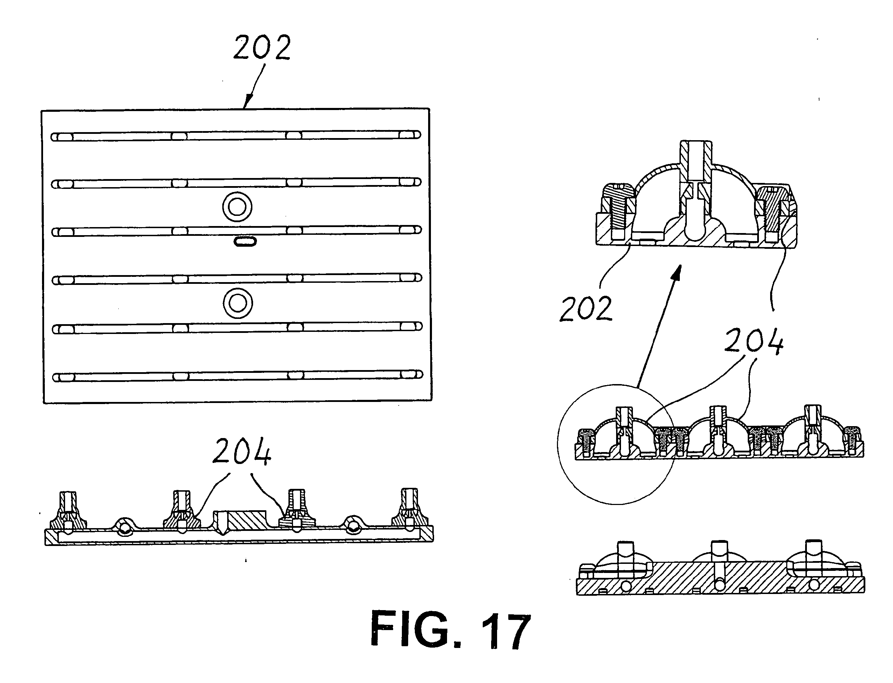

Fig. 17 shows different section views according to the arrows in Fig. 16.

By the determination tool, reference is made to an applicator plate, attachment for lifting objects or other means suitable to grip as well as retain and deliver objects between different locations.

According to the present invention, a retaining tool 2 that allows support of objects and that works by means of vacuum suction/negative pressure and that is provided with a number of ducts 3 for vacuum suction received internally in said tool 2 manufactured by, e.g., free forming or casting, comprises a number of vacuum ejectors 4 received internally in or at close distance on or at the tool 2. A fitting 5 for compressed air 6 leads to said present vacuum ejectors 4. The vacuum suction ducts 3 extend from one or more formed vacuum ejectors 4, which is or are integrated with the tool 2, to the suction side 8 of the tool.

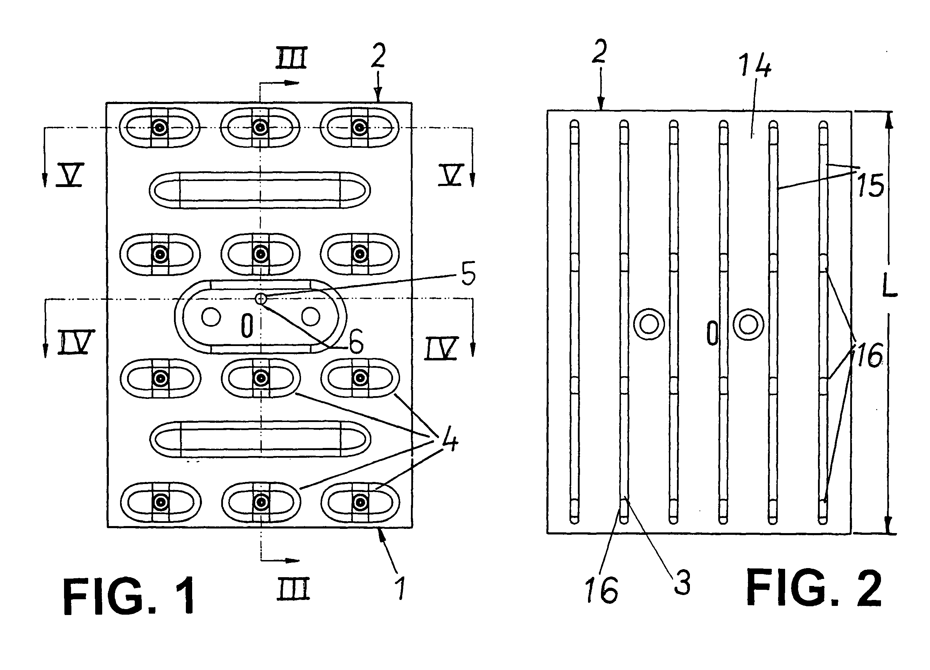

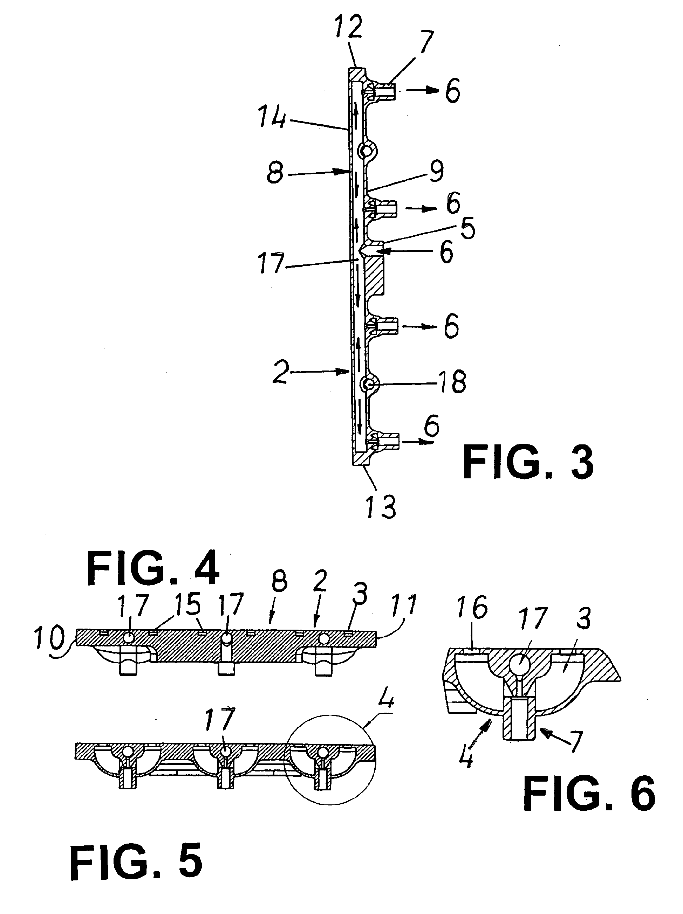

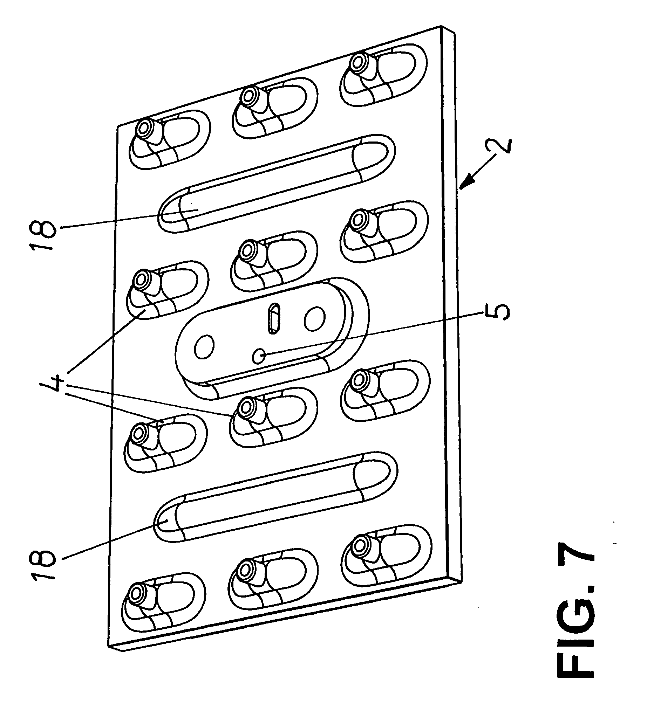

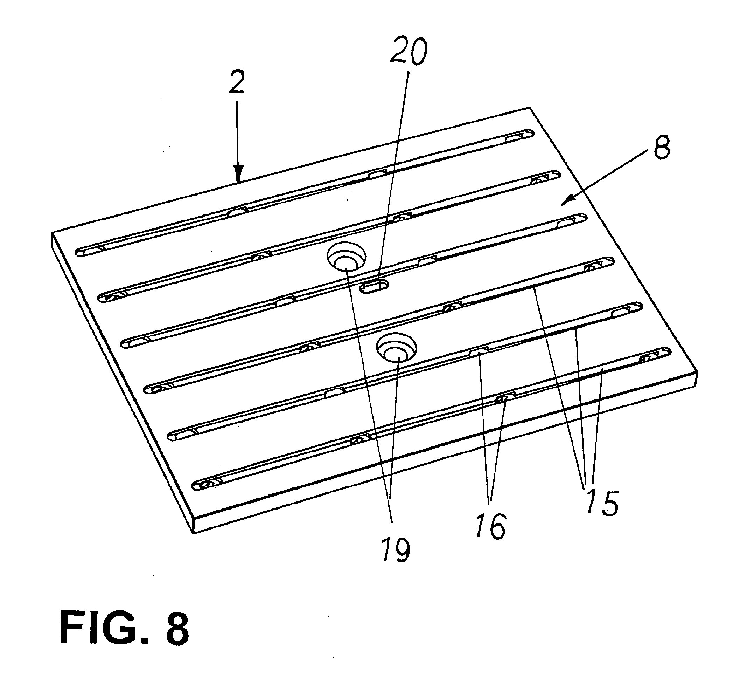

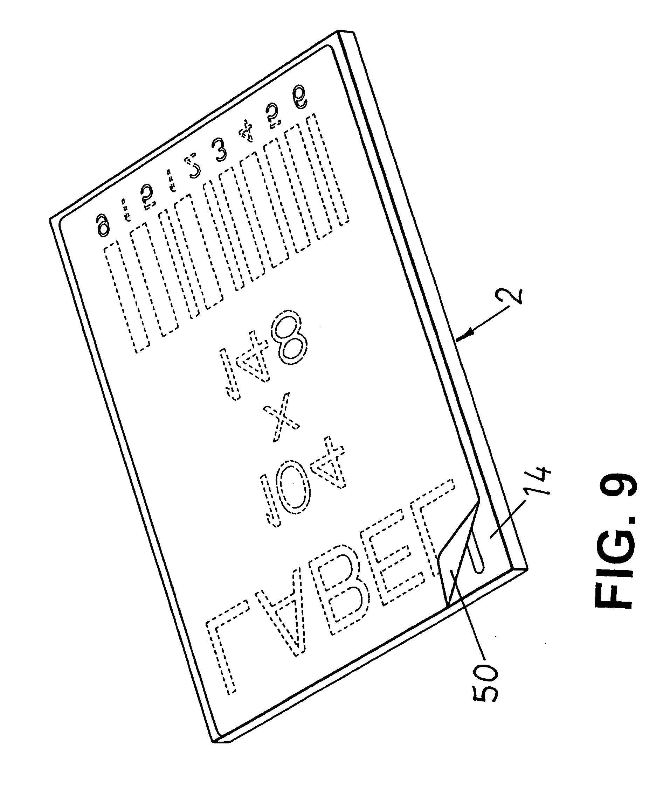

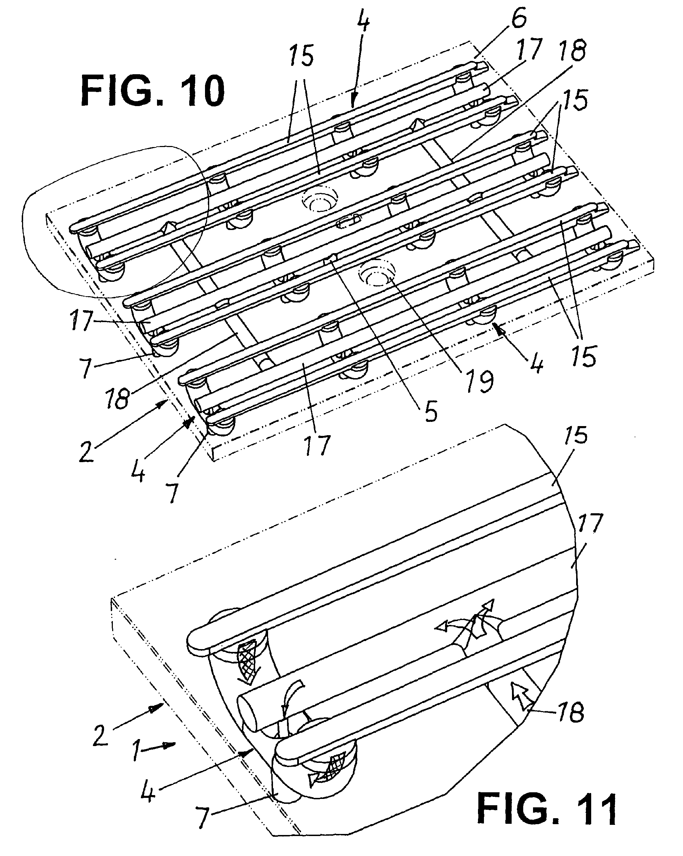

According to the embodiment shown in the drawings in Figs. 1-11, the tool 2 is formed of an applicator plate arranged to allow simple and efficient application of labels 50 onto intended objects. In that connection, inlet 5 for compressed air 6 and outlets 7 for compressed air 6, respectively, are situated on a common side 9 of the plate 2 or on different sides 10, 11; 12, 13 of the plate 2.

The proper applicator side 14 of the plate 2, which is common with the suction side 8 thereof, has connecting ducts 15 connecting to openings 16 of the vacuum section ducts 3 of said vacuum ejectors 4, which openings suitably are situated mutually equidistantly from each other along the respective duct 15.

In that connection, ducts 15, preferably distributed line-wise and equidistantly from each other, have vacuum ejectors 4 line-wise distributed transversely to the length extension L of said ducts. Pair-wise or several vacuum suction ducts 15 are, in that connection, connected to a common compressed-air fitting 17 for the respective vacuum ejector 4. In that connection, compressed-air fitting tunnels 17, situated internally in the plate 2 and extending along the surface extension of the plate and the suction side 8 of the plate 2, may be distributed line-wise along said ducts 15 and which fittings 17 laterally may be connected with transverse ducts 18.

A process for the production of a tool 2 according to the type mentioned above in the form of an applicator plate 2 for the fixation of labels 50 before the application of the same onto desired products, e.g., packages, and which comprises an optional number of suction ducts 15 as well as an optional number of ejectors 4, is provided by the fact that the tool 2, in which pressure ducts, etc., 5, 17, 18 as well as vacuum ejectors 4 are integrated internally therein, is produced by casting or by free forming of an integral piece of material. However, this does not prevent that a desired number of tools 2 situated laterally are mounted together in case it is desired to cover a larger surface than what the individual tool 2 normally covers. Numbers 19 and 20, respectively, designates holes in the tool for receipt of a fixing screw and a probe, respectively. An additional production process is casting, wherein cavities of the intended tool to be cast are formed of, e.g., wax or another material that easily can be removed after the casting.

Figs. 12-14 show a tool 2 not in accordance with the present invention, which forms a lifting grip attachment for the fixation of individual parts by means of the robot arm of a robot or by means of the arm of a human, etc., and which also works with vacuum suction and which is provided with ducts 103 for vacuum suction received internally in said tool 102 manufactured by free forming. A number of vacuum ejectors 104 are received internally in the tool 102 to which ejectors ducts 115 lead from a fitting 105 for compressed air 106, and vacuum suction ducts 103 extend from formed vacuum ejectors 104 inside the tool 102 to the suction side 108 of the tool.

In that connection, inlet 105 and outlets 107, respectively, for compressed air may be directed in different directions from the air grip attachment or be situated on a common side of the same.

Specifically, the tool 102 is, in that connection, formed of an elongate curved handle having compressed-air inlet 105 at the centre 149 thereof and compressed-air outlets 107 at the respective ends 150, 151 thereof and is provided with vacuum grip attachments 152 placed at the respective end portions 102A, 102B of the handle.

Thus, the ejectors 104 are situated internally in the handle 102 at the respective end 150 and 151 thereof and they are formed of ducts intersecting each other, similar to a T road crossing with ducts 175, 176, 177 leading from air inlet 105, air outlet duct 107 as well as vacuum duct 103.

The embodiment of the tool 202 shown in Figs. 15-17 is the same as shown and described according to the first embodiment above, but the vacuum ejectors 204 are loose and mounted on the upperside 209 of the tool 202 and fastened by screws 250. Ducts 251 for suction connection as well as screw holes 252 are, in that connection, integratedly arranged in the solid tool 202 on the upperside thereof, which is shown in Fig. 15 as an example. Otherwise, the device and the function of the tool are the same as indicated above.

The function and the nature of the invention are clearly seen from what has been described above and shown and referred to in the drawings. Manufactured tools may be utilized in ways previously known per se.

Naturally, the invention is not limited to the embodiments described above and shown in the accompanying drawings. Modifications are feasible, particularly as for the nature of the different parts, or by using an equivalent technique, without departing from the protection area of the invention, such as it is defined in the claims.

## Claims

1. A retaining tool (2) forming an applicator plate for the application of labels (50) on objects, the tool (2) comprising a fitting (5) for the inlet of compressed air (6) integrated in the tool a plurality of vacuum ejectors (4), in close connection to a suction side of the plate and vacuum suction ducts (3) extending from said vacuum ejectors (4) to the suction side (8) of the tool, the inlet fitting (5) and outlets (7), respectively, for compressed air (6) being situated on a common side (9) of the tool (2) or on different sides (10, 11; 12, 13) of the tool (2), the applicator side (14) of the plate (2) having a number of connecting ducts (15) connecting to the openings (16) of the vacuum suction ducts (3) of said vacuum ejectors (4), said vacuum ejector openings (16) being situated mutually equidistantly from each other along the respective connecting duct (15), said connecting ducts (15) being distributed line-wise and equidistantly from each other, and said vacuum ejectors (4) being line-wise distributed transversely to the length extension (L) of said connecting ducts (15).

2. A tool according to claim 1, **characterized in that**, internally in the tool (2) a number of vacuum ejectors (4) are received to which a fitting (5) for compressed air (6) leads, and that vacuum suction ducts (3) extend from formed vacuum ejectors (4) inside the tool (2) to the suction side (8) of the tool.

3. A tool according to claim 1, **characterized in that** compressed-air fitting tunnels (17), situated internally in the plate (2) and extending along the surface extension of the plate and the suction side (8) of the plate (2), are distributed line-wise along said connecting ducts (15).

4. A tool according to any one of claims 1-3, **characterized in that** pair-wise or a plurality of connecting ducts (15) are connected to a common compressed-air fitting (17) for the respective vacuum ejector (4).

5. A tool according to claim 1, **characterized in that**, externally on the tool (202), a number of vacuum ejectors (204) are detachably fastened and to which a fitting for compressed air leads, and that vacuum suction ducts (251) extend from formed vacuum ejectors (204) inside the tool (202) to the suction side of the tool.

6. A tool according to claim 5, **characterized in that** vacuum ejectors (204) are fastened on the upperside (209) of the tool (202) by means of screws (250), and that ducts (251) for suction connection as well as screw holes (252) are integrated in the tool (202) on the upperside thereof.

## Patentansprüche

1. Haltewerkzeug (2), das eine Aufbringungsplatte für die Aufbringung von Etiketten (50) auf Objekten bildet, wobei das Werkzeug (2) ein Anschlussstück (5) für den Einlass von Druckluft (6), das in das Werkzeug integriert ist, eine Vielzahl von Vakuumejektoren (4) in enger Verbindung mit einer Saugseite der Platte und Vakuumsaugkanäle (3) umfasst, die sich von den Vakuumejektoren (4) zu der Saugseite (8) des Werkzeugs erstrecken, wobei das Einlassanschlussstück (5) bzw. die Auslässe (7) für Druckluft (6) jeweils auf einer gleichen Seite (9) des Werkzeugs (2) oder auf unterschiedlichen Seiten (10, 11; 12, 13) des Werkzeugs (2) gelegen sind, die Aufbringungsseite (14) der Platte (2) eine Anzahl von Verbindungskanälen (15) aufweist, die mit Öffnungen (16) der Vakuumsaugkanäle (3) der Vakuumejektoren (4) verbunden sind, die Vakuumejektoröffnungen (16) wechselseitig gleich beabstandet voneinander entlang des jeweiligen Verbindungskanals (15) gelegen sind, die Verbindungskanäle (15) linienweise und gleich beabstandet voneinander verteilt sind, und die Vakuumejektoren linienweise quer zu der Längsausdehnung (L) der Verbindungskanäle (15) verteilt sind.

2. Werkzeug nach Anspruch 1, **dadurch gekennzeichnet, dass** innerhalb des Werkzeugs (2) eine Anzahl von Vakuumejektoren (4) aufgenommen ist, zu denen ein Anschlussstück (5) für Druckluft (6) führt, und dass Vakuumsaugkanäle (3) sich von innerhalb des Werkzeugs (2) gebildeten Vakuumejektoren (4) zu der Saugseite (8) des Werkzeugs erstrecken.

3. Werkzeug nach Anspruch 1, **dadurch gekennzeichnet, dass** Druckluftanschlussstücktunnel (17), die intern in der Platte (2) gelegen sind und die sich entlang der Oberflächenausdehnung der Platte und der Saugseite (8) der Platte (2) erstrecken, linienweise entlang der Verbindungskanäle (15) verteilt sind.

4. Werkzeug nach einem der Ansprüche 1 bis 3, **dadurch gekennzeichnet, dass** paarweise oder eine Vielzahl von Verbindungskanälen (15) mit einem gemeinsamen Druckluftanschlussstück (17) für den jeweiligen Vakuumejektor (4) verbunden sind.

5. Werkzeug nach Anspruch 1, **dadurch gekennzeichnet, dass** außerhalb an dem Werkzeug (202) eine Anzahl von Vakuumejektoren (204) abnehmbar befestigt ist und zu ihnen ein Anschlussstück für Druckluft führt, und dass Vakuumsaugkanäle (251) sich von innerhalb des Werkzeugs (202) gebildeten Vakuumejektoren (204) zu der Saugseite des Werkzeugs erstrecken.

6. Werkzeug nach Anspruch 5, **dadurch gekennzeichnet, dass** Vakuumejektoren (204) an einer Oberseite (209) des Werkzeugs (202) mittels Schrauben (250) befestigt sind, und dass Kanäle (251) zum Sauganschluss sowie Schraubenlöcher (252) in das Werkzeug (202) an dessen Oberseite integriert sind.

## Revendications

1. Outil de retenue (2) formant une plaque d'application pour l'application d'étiquettes (50) sur des objets, l'outil (2) comportant un raccord (5) pour l'admission d'air comprimé (6) intégré dans l'outil, plusieurs buses de vide (4) en relation étroite avec le côté d'aspiration de la plaque, et des canaux d'aspiration sous vide (3) se prolongeant depuis lesdites buses de vide (4) vers le côté d'aspiration (8) de l'outil, le raccord d'admission (5) et les sorties (7) pour l'air comprimé (6) étant respectivement situés d'un même côté (9) de l'outil (2) ou sur des côtés différents (10, 11 ; 12, 13) de l'outil (2), le côté d'application (14) de la plaque (2) comportant un certain nombre de canaux de liaison (15) reliés aux ouvertures (16) des canaux d'aspiration sous vide (3) desdites buses de vide (4), lesdites ouvertures d'éjecteur de vide (16) étant situées mutuellement équidistantes les unes des autres le long du canal de liaison respectif (15), lesdits canaux de liaison (15) étant répartis en lignes et équidistants les uns des autres, et lesdites buses de vide (4) étant réparties en lignes transversales au prolongement de longueur (L) desdits canaux de liaison (15).

2. Outil selon la revendication 1, **caractérisé en ce que** plusieurs buses de vide (4) sont logées à l'intérieur de l'outil (2) auxquelles conduit un raccord (5) pour de l'air comprimé (6), et **en ce que** les canaux d'aspiration sous vide (3) se prolongent depuis les buses de vide (4) conformés à l'intérieur de l'outil (2) vers le côté d'aspiration (8) de l'outil.

3. Outil selon la revendication 1, **caractérisé en ce que** des canaux de raccordement pour air comprimé (17), logés à l'intérieur de la plaque (2) et se prolongeant le long de la prolongation extérieure de la plaque et du côté d'aspiration (8) de la plaque (2), sont répartis en lignes le long desdits canaux de liaison (15).

4. Outil selon l'une quelconque des revendications 1 à 3, **caractérisé en ce que** des paires ou plusieurs canaux de liaison (15) sont reliés à un même raccord pour air comprimé (17) pour l'éjecteur de vide (4) respectif.

5. Outil selon la revendication 1, **caractérisé en ce que**, un certain nombre de buses de vide (204) sont fixées de manière amovible sur l'extérieur de l'outil (202) et auxquels conduit un raccord pour de l'air comprimé, et **en ce que** des canaux d'aspiration sous vide (251) se prolongent depuis les buses de vide (204) conformés à l'intérieur de l'outil (202) vers le côté d'aspiration de l'outil.

6. Outil selon la revendication 5, **caractérisé en ce que** les buses de vide (204) sont fixées sur la face du dessus (209) de l'outil (202) à l'aide de vis (250), et **en ce que** les conduits (251) pour le raccordement d'aspiration ainsi que les orifices de vissage (252) sont d'une seule pièce avec l'outil (202) sur la face du dessus de celui-ci.
